(19)

Europäisches Patentamt
European Patent Office
Office européen des brevets

(11) Numéro de publication: **0 019 553**
**B1**

(12) **FASCICULE DE BREVET EUROPEEN**

(45) Date de publication du fascicule du brevet: **04.05.83**

(51) Int. Cl.³: **H 04 M 1/274**, H 04 M 11/00

(21) Numéro de dépôt: **80400683.1**

(22) Date de dépôt: **16.05.80**

(54) **Appareil autonome d'appel automatique par réseau commuté pour système de traitement d'informations.**

(30) Priorité: **18.05.79 FR 7912661**

(43) Date de publication de la demande: **26.11.80 Bulletin 80/24**

(45) Mention de la délivrance du brevet: **04.05.83 Bulletin 83/18**

(84) Etats contractants désignés: **BE CH DE GB IT LI LU NL**

(56) Documents cités:
**US-A-3 299 210**
**US-A-4 086 434**
**US-A-4 125 872**

(73) Titulaire: **TRAITEMENT DE L'INFORMATION TECHNIQUES NOUVELLES Société Anonyme Française, 1, rue Gustave Eiffel, F-91420 Morangis (FR)**

(72) Inventeur: **Guignard, Claude, 9 rue de Malabry, F-92350 Le Plessis Robinson (FR)**
Inventeur: **Brisset, Roger, 99, les Hauts de Bruyère, F-91680 Bruyere-Le-Chatel (FR)**

(74) Mandataire: **Arnaud, Jean Pierre Alfred, 94 rue Saint Lazare, F-75009 Paris (FR)**

**EP 0 019 553 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Appareil autonome d'appel automatique par réseau commuté pour système de traitement d'informations

L'invention concerne un appareil autonome d'appel automatique destiné à mettre en communication un ordinateur et des équipements de transmission de données connectés sur un réseau téléphonique commuté.

Il est souvent souhaitable que les échanges de données entre un ordinateur central et des équipements de transmission de données tels que des terminaux, soient réalisés par l'intermédiaire du réseau téléphonique commuté, lorsque le volume de données échangées ne justifie pas l'utilisation de lignes louées. Cependant, les administrations ou entreprises qui gèrent les réseaux téléphoniques commutés fixent un certain nombre de contraintes qui doivent être respectées lors de l'exécution de ces échanges. Ces contraintes sont destinées à éviter d'une part un blocage d'une partie du réseau, et d'autre part, la gêne pouvant être causée aux autres usagers du réseau.

Ces contraintes portent notamment sur la détermination de périodes minimales ou maximales devant s'écouler avant que diverses opérations soient effectuées. Ainsi, une tentative de prise de ligne téléphonique ne doit être faite que lorsque la ligne a été libérée depuis au moins 6 s. Les tonalités d'invitation et de poursuite de la numérotation doivent être validées pendant au moins 1,5 s. L'envoi d'impulsions de numérotation doit commencer dans les 10 s qui suivent la détection d'une tonalité d'attente. La détection du décrochement du poste appelé doit avoir lieu dans les 2 min qui suivent la prise de ligne. En cas d'échec d'un appel, un autre appel ne doit pas être tenté avant 2 min au moins. Chaque tranche horaire ne doit pas comprendre plus de cinq tentatives non couronnées de succès. La modulation caractéristique permettant la reconnaissance d'un équipement à réponse automatique (à 2100 Hz) doit être détectée dans les 10 s qui suivent un signal de décrochement. Enfin, l'enregistrement d'un numéro appelé doit faire l'objet d'une intervention humaine pour la validation.

La description détaillée de ces contraintes n'est pas nécessaire à la compréhension de l'invention, mais il faut noter que diverses opérations de numérotation, de détection, d'émission de tonalité, de synchronisation et de temporisation doivent être exécutées à l'occasion de tels appels automatiques.

Il existe déjà des équipements d'appel automatique. Par exemple la Demanderesse vend un »équipement d'appel automatique« qui assure automatiquement la mise en communication directe de deux équipements de transmission de données par l'intermédiaire du réseau commuté. Un tel équipement est destiné à être raccordé à un ordinateur d'une part et à un modulateur-démodulateur d'autre part. Cet équipement est relié à l'ordinateur d'une part par une jonction de transmission de données et d'autre part par une jonction de signaux d'ordre. L'équipement d'appel automatique ne comporte aucun circuit de gestion d'appel. Toutes les opérations de gestion sont effectuées à l'intérieur de l'ordinateur lui-même, par ses propres circuits, si bien qu'une certaine charge de travail est subie par l'ordinateur lui-même. En outre, un tel équipement d'appel automatique ne permet la connexion qu'à une seule ligne du réseau commuté.

Le brevet des Etats-Unis d'Amérique n° 4 125 872 décrit un circuit d'adaptation de numérotation destiné à coopérer avec un ordinateur qui doit être couplé à des lignes téléphoniques. Ce circuit laisse à l'ordinateur une partie de la charge de travail, notamment la commande du passage à des sous-programmes particuliers et du retour à des sous-programmes de numérotation.

Le brevet des Etats-Unis d'Amérique n° 4 086 434 décrit un système piloté par un micro-processeur et pouvant remplir des fonctions d'appel. Ce système considéré ne se rapporte pas au domaine de l'invention puisqu'il n'y a pas d'ordinateur qui demande la connexion à des abonnés ni de circuit chargé précisément de la gestion des appels.

Le brevet des Etats-Unis d'Amérique n° 3 299 210 décrit un appreil de connexion d'un ordinateur à des lignes téléphoniques du type considéré selon l'invention. Cet appareil, étant donné son architecture interne, ne permet pas d'appels simultanés sur plusieurs lignes. Cette caractéristique est cependant très importante dans le cas d'ordinateurs qui peuvent n'échanger que très peu de données avec un interlocuteur particulier et imposent donc une charge importante de gestion d'appels.

L'invention concerne un appareil autonome d'appel automatique destiné à être placé entre un ordinateur et plusieurs lignes téléphoniques. Dans l'appareil selon l'invention, toutes les fonctions de gestion propres aux opérations d'appel automatique sont exécutées par un microprocesseur incorporé à un circuit logique de l'appareil d'appel automatique. Ainsi, la charge de travail nécessaire à la gestion des appels automatiques sur plusieurs lignes téléphoniques est supportée entièrement par l'appareil d'appel automatique, et celui-ci n'échange avec l'ordinateur que d'une part les données qui transitent directement par l'intermédiaire d'unités d'appel qui peuvent être du type des équipements d'appel automatique connus, et d'autre part des signaux d'ordre, destinés à désigner les références des postes appelés. L'appareil d'appel automatique assure l'ensemble de la gestion, notamment le respect des différentes contraintes indiquées précédemment. Grâce à cette construction, il peut réaliser simultanément plusieurs appels sur plusieurs lignes.

Plus précisément, l'invention concerne un appareil autonome d'appel automatique destiné à mettre en communication un ordinateur et des équipements de transmission de données associés à des postes connectés sur un réseau téléphonique commuté, l'appareil comprenant:

— au moins une unité d'appel, chaque unité d'appel étant reliée
  à au moins un premier connecteur par une première jonction de transmission de données de l'unité, et
  à au moins un deuxième connecteur par une seconde jonction de transmission de données de l'unité d'appel, et
— un circuit logique de gestion d'appel, comprenant un microprocesseur et relié
  à un troisième connecteur par une première jonction de transmission de signaux d'ordre, et
  à chaque unité d'appel par une deuxième jonction de transmission de signaux d'ordre,
— le premier connecteur de transmission de données étant destiné à être relié à une ligne téléphonique par l'intermédiaire d'un modulateur-démodulateur puis, par l'intermédiaire de ce dernier, à des équipements de transmission de données, le deuxième connecteur de transmission de données étant destiné à être relié à un ordinateur, et le troisième connecteur de transmission de signaux d'ordre étant destiné à être relié à l'ordinateur et ne transmettant, en provenance de l'ordinateur, que des signaux d'ordre destinés à désigner des références des postes appelés, si bien que l'appareil peut réaliser simultanément plusieurs appels sur plusieurs lignes.

L'appareil est avantageusement tel que le circuit logique de gestion d'appel comprend

— un circuit de gestion comprenant au moins un microprocesseur, une mémoire à accès direct et une mémoire passive reprogrammable, relié au troisième connecteur de transmission de signaux d'ordre, et
— au moins un circuit de multiplexage et d'adaptation, relié à au moins une unité d'appel par la deuxième jonction de transmission de signaux d'ordre.

Chaque circuit de multiplexage et d'adaptation est avantageusement relié à quatre unités d'appel au maximum par quatre jonctions de transmission de signaux d'ordre. Un exemple d'appareil gère huit lignes et comporte deux circuits de multiplexage et d'adaptation.

Chaque unité d'appel comprend avantageusement un circuit d'adaptation à chacune des première et seconde jonctions de transmission de données, un circuit d'adaptation à la seconde jonction de signaux d'ordre, un circuit de détection de différentes tonalités notamment, un circuit de numérotation et des circuits d'émission, de gestion, de synchronisation et de temporisation. Ces derniers circuits d'émission, de gestion, de synchronisation et de temporisation sont avantageusement sous forme d'un microprocesseur, muni des composants associés habituels. Dans ce cas, il est aussi avantageux que les circuits d'adaptation, de détection et de numérotation soient disposés sur un premier support matériel tel qu'une carte de circuit, et que les autres circuits d'émission, de gestion, de synchronisation et de temporisation soient placés sur le même circuit matériel que le circuit de gestion du circuit logique de gestion d'appel, les deux supports matériels étant reliés par une jonction de transmission de signaux d'ordre. Dans ce dernier cas, le microprocesseur du circuit de gestion et celui des circuits d'émission, de gestion, de synchronisation et de temporisation peuvent ne former qu'un seul composant.

En outre, il est avantageux qu'une unité d'appel au moins comporte un circuit d'adaptation à une ligne téléphonique, ce circuit pouvant être relié à un quatrième connecteur destiné à être relié lui-même à un modulateur-démodulateur extérieur à l'appareil. Dans un autre mode de réalisation, les modulateurs-démodulateurs associés aux unités d'appel sont incorporés à l'appareil autonome d'appel automatique, entre le premier connecteur et l'unité d'appel. Dans ce cas, chaque modulateur-démodulateur est avantageusement relié à l'unité d'appel par une jonction téléphonique.

L'appareil selon l'invention présente des avantages très importants. En effet, jusqu'à présent, n'a disposé que d'équipements ne permettant la jonction des lignes qu'au détriment de la charge de travail de l'ordinateur associé. Bien entendu, les opérations de gestion nécessaires à de tels appels automatiques ont aussi déjà été réalisées à l'aide de microprocesseurs, mais uniquement dans des coupleurs propres à tel ou tel type d'ordinateur. Ainsi, jusqu'à présent, l'utilisation de la fonction d'appel automatique dans les systèmes de traitement de données a nécessité la réalisation à chaque fois d'un coupleur adapté qu type particulier d'ordinateur considéré. On sait que les frais d'étude de tels coupleurs spécialisés sont extrêmement élevés et en conséquence la fonction d'appel automatique n'a pas été développée autant qu'elle aurait pu l'être. Au contraire, l'appareil selon l'invention donne une très grande souplesse étant donné qu'il peut être raccordé à n'importe quel type d'ordinateur, les connexions étant des types normalisés utilisés de façon presqu'universelle dans l'industrie des ordinateurs. Ainsi, les seules jonctions réalisées entre l'ordinateur et l'appareil autonome selon l'invention sont des jonctions d'application universelle, désignées par la référence J 100 dans les recommandations du comité consultatif CCITT. Le nombre de lignes pouvant être gérées par l'appareil selon l'invention peut être étendu à volonté, suivant l'importance du système de traitement d'information.

D'autres caractéristiques et avantages de l'invention ressortiront mieux de la description qui va suivre, faite en référence aux dessins annexés sur lesquels:

— la fig. 1 est un diagramme synoptique d'un appareil autonome d'appel automatique selon l'invention, représenté associé à certains éléments extérieurs;
— la fig. 2 est un diagramme synoptique du circuit logique de gestion d'appel de l'appareil de la fig. 1;
— la fig. 3 est un diagramme synoptique du circuit de gestion du circuit logique de gestion d'appel de la fig. 2;
— la fig. 4 est un diagramme synoptique partiel d'un circuit d'adaptation du circuit logique de gestion d'appel de la fig. 2; et
— la fig. 5 est un diagramme synoptique d'une variante d'unité d'appel automatique, particulièrement utile dans l'appareil de la fig. 1.

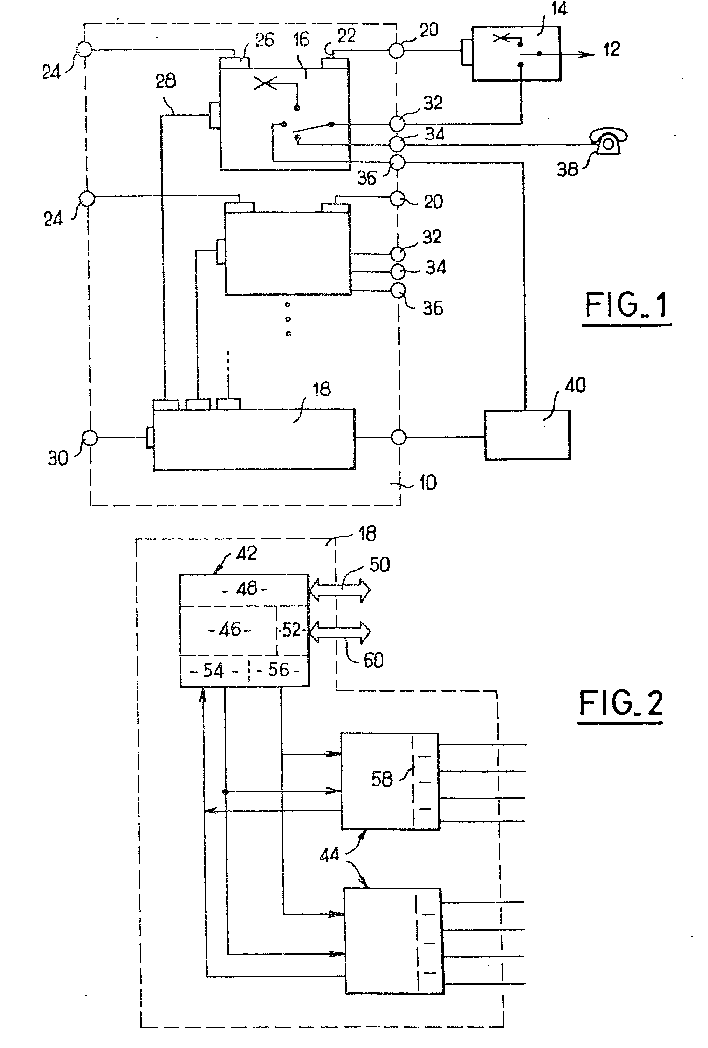

La fig. 1 représente de façon générale l'appareil autonome d'appel automatique selon l'invention. Celui-ci est destiné à être monté d'une part entre un ordinateur, non représenté mais qui se trouverait à gauche sur la fig. 1, et des modulateurs-démodulateurs 14, reliés à des lignes téléphoniques 12 permettant la connexion à des équipements éloignés de transmission de données, par exemple des terminaux. L'appareil autonome 10 comprend essentiellement une ou plusieurs unités 16 d'appel automatique et un circuit logique 18 de gestion d'appel. Chaque unité 16 d'appel automatique est reliée à un modulateur-démodulateur 14 par l'intermédiaire d'une jonction 22 de transmission de données, parvenant, à la sortie de l'appareil selon l'invention, à un connecteur 20. L'unité 16 est aussi reliée à un connecteur 24 par une jonction 26 de transmission de données. Les deux jonctions 22 et 26 sont avantageusement du type J 100, conforme aux recommandations du comité CCITT. Les jonctions 22 et 26 n'assurent que la transmission de données provenant de l'ordinateur et destinées aux terminaux ou provenant des terminaux et destinées à l'ordinateur.

Une jonction 28 qui est avantageusement aussi d'un type normalisé ou recommandé, par exemple du type J 200 du comité CCITT, assure la liaison entre les unités d'appel 16 et le circuit logique 18 de gestion d'appel, séparément. Il faut noter que chaque jonction 28 ne transmet que des signaux d'ordre et aucun signal de données. Chaque jonction 28 peut aussi être doublée par une ligne spécifique permettant la transmission de signaux particuliers entre le circuit logique 18 et l'unité d'appel 16, indiquant notamment l'échec d'un appel du fait de la disparition d'un numéro d'appel ayant donné lieu à un incident, par exemple d'un type ne satisfaisant pas aux contraintes indiquées précédemment.

Le circuit logique 18 est ainsi relié à chacune des unités d'appel 16 par une jonction particulière. Ce circuit 18 reçoit des signaux d'ordre de l'ordinateur par l'intermédiaire d'un connecteur 30, la liaison entre l'ordinateur et le circuit 18 étant aussi avantageusement sous forme d'une jonction J 100. Les informations transmises par l'ordinateur au circuit 18 désignent des références des postes appelés, et elles ne comprennent jamais de données qui sont transmises exclusivement par les jonctions 26 et 22.

On note sur la fig. 1 que les unités 16 d'appel sont en outre reliées à des bornes 32, 34, 36. La borne 32 est destinée à permettre une liaison téléphonique directe entre le modulateur-démodulateur 14 et l'unité d'appel associée 16. Le connecteur 34 est destiné à permettre une connexion directe d'un combiné téléphonique 38, celui-ci pouvant ainsi être raccordé indirectement à la ligne 12. L'unité 16 est en outre reliée, éventuellement, à un circuit extérieur 40 qui, sous la commande du circuit logique 18, transmet des messages. Ainsi, par exemple, à la suite d'un appel défectueux, lorsque la communication est établie avec un abonné ordinaire, le circuit 18 commande la transmission à cet abonné d'un message enregistré dans l'appareil 40 et indiquant l'origine et la cause de l'erreur afin que cet abonné dérangé soit rassuré.

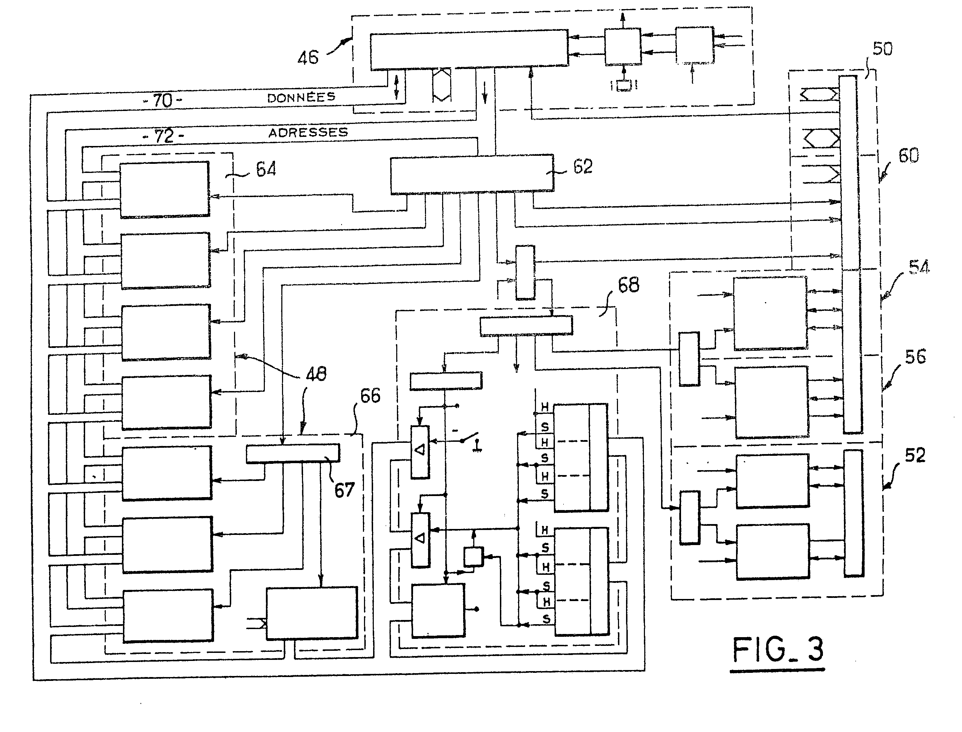

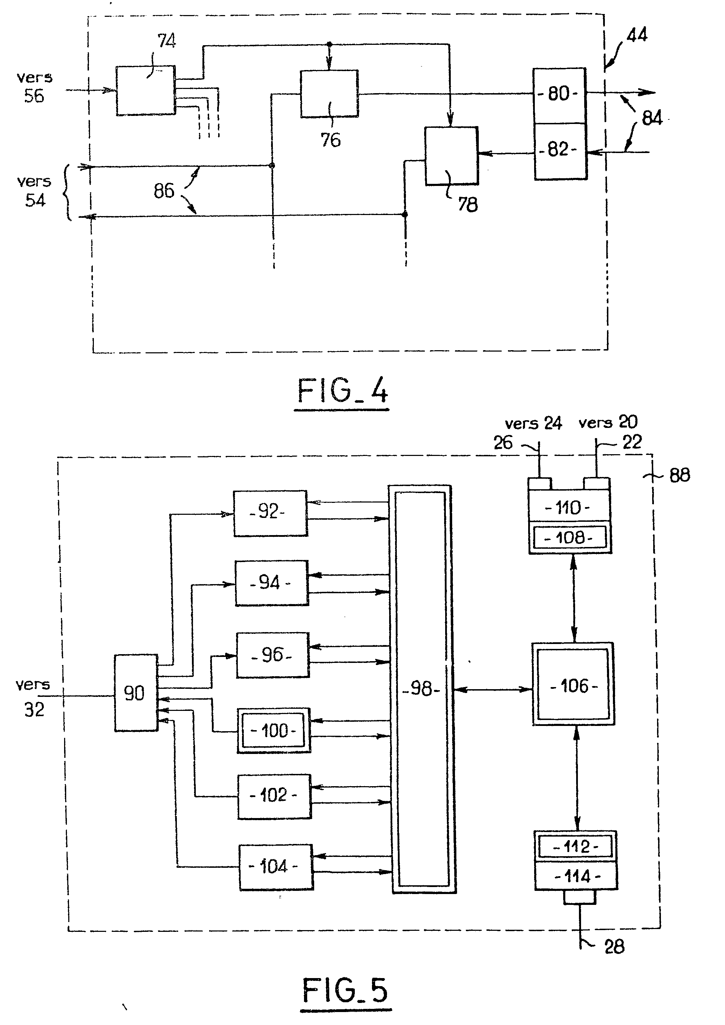

La fig. 2 est un diagramme synoptique un peu plus détaillé du circuit logique 18 de gestion d'appel. Celui-ci comprend essentiellement un circuit de gestion proprement dit, repéré par la référence 42, et un, deux, trois, ... circuits 44 de multiplexage et d'adaptation. Le circuit 42, représenté plus en détail sur la fig. 3, comprend de façon générale un microprocesseur 46, par exemple un microprocesseur de la série 6800 de Motorola, par exemple du type 6802. Le circuit 42 comporte aussi des mémoires 48, un circuit 52 de couplage à une ligne synchrone de commande et des circuits 54 et 56 de couplage aux circuits 44 de multiplexage et d'adaptation. Ces circuits 44 sont décrits plus en détail en référence à la fig. 4. On a aussi représenté une ligne omnibus 50 permettant une extension des mémoires, et la ligne 60, reliée au circuit 52 de couplage, rejoint le connecteur 30 représenté sur la fig. 1.

La fig. 3 représente plus en détail le circuit 42 de gestion du circuit logique 18. On reconnaît sur la fig. 3 le microprocesseur 46, associé à une horloge et une commande de rétablissement, les mémoires 48, le circuit de couplage 52, les circuits de couplage 54, 56 et la ligne asynchrone 60. La fig. 3 indique la relation entre les différents éléments, et la référence 62 désigne une mémoire programmable de décodage de champ d'adresse. La mémoire 48 comprend en fait des mémoires reprogrammables 64 et des mémoires à accès direct 66 associées à un décodeur 67. La référence 68 représente un circuit classique de rythme. Les références 70 et 72 désignent des lignes omnibus de données et d'adresses respectivement.

Il faut noter, en référence aux circuits 52, 54, 56 de couplage, que le circuit 52 destiné à être relié à la ligne asynchrone constitue un circuit d'adaptation série alors que les circuits 54 et 56 de couplage destinés à être reliés aux circuits 44 de multiplexage et d'adaptation assurent des connexions de type parallèle.

L'ensemble du circuit de la fig. 3 est de préférence formé sur une seule carte de circuit, les connexions étant assurées par les circuits de couplage 52, 54, 56, 60 formés en fond de panier ou sur la face avant.

La fig. 4 est un diagramme synoptique d'un circuit de multiplexage et d'adaptation, repéré par la référence 44 sur la fig. 2. Ce circuit est avantageusement formé sur une carte unique et il est destiné à la gestion des échanges sur quatre lignes téléphoniques. A cet effet, il comprend un circuit unique 74 de décodage d'adresse, destiné à transmettre des signaux à quatre circuits parallèles dont un seul est représenté sur la fig. 4, les lignes se terminant en traits interrompus étant destinées à assurer les connexions aux trois autres circuits analogues montés en parallèle. Sur la fig. 4, la référence 76 désigne une mémoire de données et la référence 78 un circuit tampon. Les références 80 et 82 représentent respectivement des circuits d'adaptation d'émission et de réception. Les lignes 84 représentent la jonction précitée J 200 qui parvient à une unité d'appel 16.

Le circuit 74 reçoit les signaux du circuit 56 de couplage, et les lignes 86 assurent la transmission d'informations entre le circuit 54 de couplage du circuit de gestion de la fig. 3 et les circuits particuliers 76 et 78 des quatre circuits de ligne.

La fig. 5 est un diagramme synoptique d'une unité d'appel automatique selon une variante de l'invention. L'unité 16 décrite rapidement en référence à la fig. 1 est une carte de circuit de type connu, présentée sous forme d'une carte de circuit imprimé enfichable entièrement câblée. Dans la variante de la fig. 5, un certain nombre d'opérations de gestion sont réalisées au niveau de l'unité d'appel automatique.

La fig. 5 représente l'architecture générale d'une telle variante d'unité d'appel automatique, repérée de façon générale par la référence 88. On a repéré par les références 22, 26 et 28, empruntées à la fig. 1, les jonctions de type J 100 destinées à la transmission de données, comme indiqué par les références 22 et 26, rejoignant les connecteurs 20 et 24 respectivement, et de type J 200, pour la jonction 28. La ligne représentée à gauche est destinée à rejoindre le connecteur 32. Par contre, l'organisation à l'intérieur du circuit 88 est très différente de celle qu'on a considérée en référence à la fig. 1. Le circuit 90 représente simplement un circuit d'adaptation de ligne. Il permet la connexion à la ligne téléphonique 12, de circuits 92, 94 et 96 qui sont destinés respectivement à la détection du signal de décrochement du numéro appelé, à la détection des tonalités d'invitation et de poursuite, et à la détection de la tonalité identifiant un abonné à appel automatique (signal à 2100 Hz). Ces trois circuits remplissent donc des fonctions de détection à partir des informations qu'ils reçoivent par l'intermédiaire du circuit 90 d'adaptation de ligne. Les informations qu'ils détectent parviennent à un circuit 98 de gestion de ligne. Celui-ci échange aussi des informations avec un circuit 100 destiné à émettre, par l'intermédiaire du circuit 90 d'adaptation, un signal à 1300 Hz. En outre, le circuit 98 de gestion de ligne commande des circuits 102 et 104 destinés à commander l'appel, chacun des circuits correspondant à l'une des techniques d'appel, c'est-à-dire au découpage du courant de ligne ou à l'appel multi-fréquence. Les appels sont donc possibles avec les deux types de circuit des réseaux commutés. Le circuit 98 de gestion de ligne échange aussi des informations avec un circuit 106 de synchronisation générale et de gestion des temporisations. Ce circuit est relié d'une part à un circuit 108 de surveillance du fonctionnement du circuit 100 d'adaptation aux jonctions J 100 22 et 26 et d'autre part à un circuit 112 de gestion des échanges réalisés par la jonction J 200 28, à l'aide d'un circuit d'adaptation 114.

La description qui précède indique que certaines opérations de simple gestion sont mises en oeuvre dans le circuit de la fig. 5. Celui-ci peut donc comporter, pour les éléments 98, 100, 106, 108, 112 représentés par des cadres doubles, un microprocesseur et les composants associés (mémoire, horloge, etc.). Cependant, dans un mode de réalisation avantageux de l'invention, ces éléments 98, 100, 106, 108 et 112 sont incorporés à la carte de circuit 42 du microprocesseur. En fait, les fonctions qui doivent être remplies par les circuits 98, 100, 106, 108 et 112 sont remplies par le microprocesseur du circuit de gestion 42. Les deux variantes sont possibles. Lorsque la charge de travail de l'unité d'appel est particulièrement importante, il est avantageux que chaque unité d'appel 88 comporte son propre micorprocesseur alors que, au contraire, pour des opérations peu fréquentes ou une charge de travial réduite, il est préférable que les opérations dévolues aux circuits 98, 100, 106, 108 et 112 soient exécutées par le microprocesseur 46 du circuit 42. Dans ce dernier cas, le circuit 88 porte sur une carte séparée des composants 90, 92, 94, 96, 102, 104, 110 et 114, et une jonction supplémentaire est réalisée entre ces différents composants et le microprocesseur 46.

L'unité d'appel 88 présente de grands avantages. D'abord, elle permet une réduction du matériel utilisé car le microprocesseur prend en charge l'essentiel des fonctions logiques qui, dans les circuits connus, sont mises en oeuvre par des composants discrets. Cette réduction du volume permet aussi la mise en oeuvre de fonctions supplémentaires que ne peuvent pas remplir les circuits connus, par exemple l'exécution d'une séquence de numérotation par découpage du courant de ligne, ou l'exécution d'une séquence de numérotation par l'envoi de codes multi-fréquence.

Ainsi, l'invention concerne un appareil autonome d'appel automatique qui sépare totalement les opérations d'échange de données et d'échange d'ordres et d'informations autres que les données, et qui se charge en outre de toutes les opérations de gestion. Il faut noter que, lorsque ces opérations doivent être programmées au niveau de l'ordinateur du système de traitement de données, le travail de programmation est considérable étant donné que ces fonctions d'appel automatique s'imbriquent plus ou moins dans les autres fonctions. Au contraire, dans l'appareil selon l'invention, toutes ces fonctions sont séparées et il suffit que l'ordinateur transmette ses ordres, c'est-à-dire les numéros d'appel des lignes auxquelles il doit transmettre des données.

En outre, cette réalisation totalement séparée et autonome évite tous les problèmes d'adaptation de coupleurs particuliers dont les frais d'étude sont toujours très élevés.

**Revendications**

1. Appareil autonome d'appel automatique (10) destiné à mettre en communication un ordinateur et des équipements de transmission de données associés à des postes connectés sur un réseau téléphonique commuté, ledit appareil compartant:

— au moins une unité d'appel (16), chaque unité d'appel étant reliée
à au moins un premier connecteur (20) par une première jonction (22) de transmission de données de l'unité d'appel, et
à au moins un deuxième connecteur (24) par unte seconde jonction (26) de transmission de données de l'unité d'appel, et
— un circuit logique de gestion d'appel (18), comprenant un microprocesseur (46) et relié à un troisième connecteur (30) par une première jonction de transmission de signaux d'ordre, et
à chaque unité d'appel par une deuxième jonction (28) de transmission de signaux d'ordre,
— le premier connecteur (20) de transmission de données étant destiné à être relié à une ligne téléphonique (12) par l'intermédiaire d'un modulateur-démodulateur (14), puis, par l'intermédiaire de ce dernier (12), à des équipements de transmission de données,
— le deuxième connecteur (24) de transmission de données étant destiné à être relié à un ordinateur, et
— le troisième connecteur (30) de transmission de signaux d'ordre étant destiné à être relié à l'ordinateur et ne transmettant, en provenance de l'ordinateur, que de signaux d'ordre destinés à désigner des références des postes appelés,
— si bien que l'appareil (10) peut réaliser simultanément plusieurs appels sur plusieurs lignes.

2. Appareil selon la revendication 1, caractérisé en ce que le circuit logique de gestion d'appel (18) comprend

— un circuit de gestion (42) comprenant au moins un microprocesseur (46), une mémoire (66) à accès direct et une mémoire (64) passive programmable, et relié au troisième connecteur (30) de transmission de signaux d'ordre, et
— au moins un circuit (44) de multiplexage et d'adaptation, relié à au moins une unité d'appel par la deuxième jonction de transmission de signaux d'ordre.

3. Appareil selon la revendication 2, caractérisé en ce que chaque circuit (44) de multiplexage et d'adaptation est relié à quatre unités d'appel au maximum, par quatre jonctions de transmission de signaux d'ordre.

4. Appareil selon l'une quelconque des revendications 1 à 3, caractérisé en ce que chaque unité (88) d'appel comprend

— un circuit (110) d'adaptation à chacune des première et seconde jonctions de transmission de données, un circuit (114) d'adaptation à la seconde jonction de signaux d'ordre, un circuit de détection (92, 94, 96), un circuit de numérotation (102, 104), et des circuits d'émission (100), de gestion (98), de synchronisation et de temporisation (106).

5. Appareil selon la revendication 4, caractérisé en ce que les circuits d'émission, de gestion, de synchronisation et de temporisation sont sous forme d'un microprocesseur muni de composants associés.

6. Appareil selon l'une des revendications 4 et 5, caractérisé en ce que les circuits d'adaptation, de détection, et de numérotation sont disposés sur un premier support matériel, et les circuits d'émission, de gestion, de synchronisation et de temporisation sont placés sur le même support matériel que le circuit de gestion du circuit logique de gestion d'appel, les deux supports matériels étant reliés par une jonction de transmission de signaux d'ordre.

7. Appareil selon l'une quelconque des revendications précédentes, caractérisé en ce qu'une unité d'appel au moins comporte un circuit d'adaptation à une ligne téléphonique, relié à un quatrième connecteur (32), le premier (20) et le quatrième connecteur étant destinés à être relié à un modulateur-démodulateur (14) extérieur à l'appareil.

8. Appareil selon l'une quelconque des revendications 1 à 6, caractérisé en ce qu'il comporte en outre un modulateur-démodulateur associé à chaque unité d'appel (16), le modulateur-démodulateur étant placé entre l'unité d'appel et le premier connecteur (20).

9. Appareil selon la revendication 8, caractérisé en ce que chaque modulateur-démodulateur et l'unité d'appel (16) associée sont reliés en outre par une jonction téléphonique.

10. Appareil selon l'une quelconque des revendications précédentes, caractérisé en ce qu'il comporte un cinquième et un sixième connecteur (36), le cinquième connecteur étant destiné à recevoir des ordres du circuit logique de gestion d'appel et le sixième connecteur étant destiné à transmettre directement des messages à une unité d'appel afin que celle-ci les retransmette à un modulateur-démodulateur par l'intermédiaire d'une connexion téléphonique.

**Patentansprüche**

1. Autonomes Gerät zum automatischen Anrufen (10), das dazu bestimmt ist, einen Rechner und Datenübertragungseinrichtungen, die an ein Vermittlungstelefonnetz angeschlossenen Stationen zugeordnet sind, miteinander in Verbindung zu bringen, wobei dieses Gerät umfaßt:

— wenigstens eine Rufeinheit (16), wobei jede Rufeinheit verbunden ist
über eine erste Datenübertragungsverbindung (22) der Rufeinheit mit einem ersten Leitungsverbinder (20) und
über eine zweite Datenübertragungsverbindung (26) der Rufeinheit mit einem zweiten Leitungsverbinder (24), und
— eine logische Anrufverwaltungsschaltung (18), die einen Mikroprozessor (46) enthält und verbunden ist
über eine erste Befehlssignalübertragungsverbindung mit einem dritten Leitungsverbinder (30) und
über eine zweite Befehlssignalübertragungsverbindung (28) mit jeder Rufeinheit
— wobei der erste Leitungsverbinder (20) für die Datenübertragung dazu bestimmt ist, an eine Telefonleitung (12) über einen Modulator/Demodulator (14) und anschließend über diesen mit Datenübertragungseinrichtungen verbunden zu werden,
— wobei der zweite Leitungsverbinder (24) zur Übertragung von Daten dazu bestimmt ist, an einen Rechner angeschlossen zu werden, und wobei
— der dritte Leitungsverbinder (30) zur Übertragung von Befehlssignalen dazu bestimmt ist, mit einem Rechner verbunden zu werden, und aus dem Rechner nur Befehlssignale überträgt, die dazu bestimmt sind, die Bezeichnung der angerufenen Stationen anzugeben,
— so daß das Gerät (10) gleichzeitig mehrere Anrufe auf mehreren Leitungen durchführen kann.

2. Gerät nach Anspruch 1, dadurch gekennzeichnet, daß die logische Anrufverwaltungsschaltung (18) umfaßt

— eine Verwaltungsschaltung (42), die wenigstens einen Mikroprozessor (46), einen Direktzugriffsspeicher (66) und einen programmierbaren Festwertspeicher (64) enthält und an den dritten Leitungsverbinder (30) zur Übertragung von Befehlssignalen angeschlossen ist, und
— wenigstens eine Multiplexier- und Anpassungsschaltung (44), die wenigstens mit einer Rufeinheit über die zweite Befehlssignalübertragungsverbindung verbunden ist.

3. Gerät nach Anspruch 2, dadurch gekennzeichnet, daß jede Multiplexier- und Anpassungsschaltung (44) mit maximal vier Rufeinheiten über vier Befehlssignalübertragungsverbindungen verbunden ist.

4. Gerät nach einem der Ansprüche 1 bis 3, dadurch gekennzeichnet, daß jede Rufeinheit (88) umfaßt

— eine erste Anpassungsschaltung (110) in jeder der ersten und zweiten Datenübertragungsverbindungen, eine Anpassungsschaltung (114) in der zweiten Befehlssignalverbindung, eine Detektionsschaltung (92, 94, 96), eine Numerierschaltung (102, 104) und Sende- (100), Verwaltungs- (98), Synchronisations- und Zeitsteuerungsschaltungen (106).

5. Gerät nach Anspruch 4, dadurch gekennzeichnet, daß die Sende-, Verwaltungs-, Synchronisations- und Zeitsteuerungsschaltungen in Form eines Mikroprozessors verwirklicht sind, der mit zugeordneten Bauelementen versehen ist.

6. Gerät nach Anspruch 4 oder 5, dadurch gekennzeichnet, daß die Anpassungs-, Detektions- und Numerierschaltungen auf einem ersten Bauteilträger und die Sende-, Verwaltungs-, Synchronisations- und Zeitsteuerungsschaltungen auf demselben Bauteilträger wie die Verwaltungsschaltung der logischen Anrufverwaltungsschaltung angeordnet sind, wobei diese beiden Bauteilträger durch eine Befehlssignalübertragungsverbindung verbunden sind.

7. Gerät nach einem der vorstehenden Ansprüche, dadurch gekennzeichnet, daß wenigstens eine Rufeinheit eine Anpassungsschaltung zur Anpassung an eine Telefonleitung umfaßt, die mit einem vierten Leitungsverbinder (32) verbunden ist, wobei der erste (20) und der vierte Leitungsverbinder dazu bestimmt sind, an einen Modulator/Demodulator (14) angeschlossen zu werden, der außerhalb des Gerätes angeordnet ist.

8. Gerät nach einem der Ansprüche 1 bis 6, dadurch gekennzeichnet, daß es ferner einen Modulator/Demodulator umfaßt, der jeder Rufeinheit (16) zugeordnet ist, wobei der Modulator/ Demodulator zwischen der Rufeinheit und dem ersten Leitungsverbinder (20) angeordnet ist.

9. Gerät nach Anspruch 8, dadurch gekennzeichnet, daß jeder Modulator/Demodulator und die zugeordnete Rufeinheit (16) ferner durch eine Telefonleitung verbunden sind.

10. Gerät nach einem der vorstehenden Ansprüche, dadurch gekennzeichnet, daß es einen fünften und einen sechsten Leitungsverbinder (36) umfaßt, wobei der fünfte Leitungsverbinder dazu bestimmt ist, Befehle aus der logischen Anrufverwaltungsschaltung entgegenzunehmen, und der sechste Leitungsverbinder dazu bestimmt ist, Nachrichten direkt zu einer Rufeinheit zu übertragen, damit diese sie über eine Telefonverbindung wieder zu einem Modulator/Demodulator überträgt.

## Claims

1. Self-contained automatic calling apparatus for providing communications between a computer and data transmission equipments coupled to stations connected to a switched telephonic network, said apparatus comprising

- at least a calling unit (16), each unit being connected to
  at least a first connector (20) through a first data transmission junction (22) of said calling unit, and
  at least a second connector (24) through a second data transmission junction (26) of said calling unit, and
- a logic call handling circuit (18) including a microprocessor (46) and connected to
  a third connector (30) through a first control signal transmission junction, and to
  each calling unit through a second control signal transmission junction (28),
- first data transmission connector (20) being provided to be connected to a telephonic line (12) through a modulator-demodulator (14) and, through this one, to data transmission equipments,
- second data transmission connector (24) being provided to be connected to a computer, and
- third control signal transmission connector (30) being provided for to be connected to computer and transmitting from said computer only control signals designating called station references,
- so that said apparatus (10) can simultaneously provide for several calls through several lines.

2. Apparatus according to claim 1, wherein the logic call handling circuit (18) includes

- handling circuit (42) including at least a microprocessor (46), a random access memory (66) and a programmable read-only memory (64) and connected to said third control signal transmission connector (30), and
- at least an adapting and multiplexing circuit (44) connected to at least one calling unit through said second control signal transmission junction.

3. Apparatus according to claim 2, wherein each adapting and multiplexing circuit (44) is connected to four calling units at most through four control signal transmission junctions.

4. Apparatus according to any of claims 1 to 3, wherein each calling unit (88) includes

- an adapting circuit (112) at each of first and second data transmission junctions, an adapting circuit (114) at the second control signal junction, detecting circuit (92, 94, 96), numbering circuit (102, 104), and emitting (100), handling (98), synchronising and timing (106) circuits.

5. Apparatus according to claim 4, wherein emitting, handling, synchronising and timing circuits are formed by a microprocessor with coupled components.

6. Apparatus according to on of claims 4 and 5, wherein adapting, detecting and numbering circuits are on a first physical support, emitting, handling, synchronising and timing circuits are on the same support as said handling circuit of logic call handling circuit, and the two physical supports are connected through a control signal transmission junction.

7. Apparatus according to any of preceding claims, wherein at least a calling unit includes a telephonic line adapting circuit connected to a fourth connector (32), the first (20) and fourth connectors being provided for to be connected to an external modulator-demodulator (14).

8. Apparatus according to any of claims 1 to 6, further including a modulator-demodulator coupled to each calling unit (16) and disposed between said calling unit and first connector (20).

9. Apparatus according to claim 8, wherein each modulator-demodulator and the coupled calling unit (16) are also connected by a telephonic junction.

10. Apparatus according to any of preceding claims, further including fifth and sixth connectors (36) provided respectively to receive controls from logic call handling circuit and to directly transmit messages to a calling unit which retransmits them to a modulator-demodulator through a telephonic connection.

14
12
26
16
22
20
24
28
32
34
38
36
20
24
32
34
36
FIG_1
18
40
30
10
18
42
50
- 48 -
- 46 -
52
60
- 54 -
- 56 -
FIG_2
58
44

50
60
54
56
52
68
62
46
DONNEES
ADRESSES
64
48
66
67
70
72
H
S
FIG_3

74
vers 56
76
44
-80-
84
-82-
vers 54
86
78

FIG_4

vers 24
vers 20
26
22
88
-92-
-94-
-96-
vers 32
90
-98-
-106-
-100-
-102-
-104-
-110-
-108-
-112-
-114-
28

FIG_5